# EUROPEAN PATENT SPECIFICATION

(11) **EP 1 495 635 B1**
(45) Date of publication and mention of the grant of the patent: **08.05.2019**
(21) Application number: 03745661.3
(22) Date of filing: 28.03.2003
(51) Int. Cl.: H04N 21/422, H04N 21/4223, H04N 21/45, H04N 21/478, H04N 21/488, H04N 21/81, H04N 21/858, H04N 5/445, H04N 7/173, G06F 3/00, G06F 3/0481, G06F 13/00, G06Q 30/02, H04N 21/462

(54) **AUTOMATIC ADVERTISEMENT INSERTION INTO AN INTERACTIVE TELEVISION TICKER**
AUTOMATISCHES EINFÜGEN VON WERBUNG IN EINEN INTERAKTIVEN FERNSEH-TICKER
INSERTION DE PUBLICITE AUTOMATIQUE DANS UN TELESCRIPTEUR DE TELEVISION INTERACTIVE

(30) Priority: 28.03.2002 US 112071
(43) Date of publication of application: 12.01.2005
(73) Proprietor: Arris Group, Inc., Suwanee, GA 30024 (US)
(72) Inventor: MCKENNA, Thomas, P., Jr., Sammamish, WA 98075 (US)
(74) Representative: Openshaw & Co.
(86) International application number: PCT/US2003/009674
(87) International publication number: WO 2003/084219

(56) References cited:
- WO-A1-99/56473
- GB-A- 2 309 134
- US-A- 5 663 757
- US-A- 5 677 708
- US-A- 6 025 837
- US-A- 6 029 045
- US-A1- 2001 001 160
- US-B1- 6 172 677
- US-B1- 6 526 577
- US-B1- 6 536 041
- US-B1- 6 564 379

## Description

### BACKGROUND OF THE INVENTION

### Field of the Invention

This disclosure relates generally to presentation of information on a display device, and in particular but not exclusively, relates to insertion of advertisements into an interactive television "ticker."

### Description of the Related Art

An important business element in the production and distribution of television programming is revenue received from manufacturers and service providers who pay to advertise their products. The ubiquitous television commercial is the manifestation of this enterprise. The survival of a television program is heavily dependent on the advertising revenue that can be realized from the television program. Advertisers in turn rely on the ability of the television program to draw viewers who then become potential purchasers of the advertised products.

Television and Internet technologies are beginning to converge. In particular, access to the World Wide Web via an Internet-enabled television system (sometimes referred to as "interactive television" or "enhanced television") is progressing and becoming more popular. In a typical scenario, a television commercial can be provided with a "trigger" that renders an icon on television display screen, signaling to the viewers that there is a potential e-commerce opportunity.

Viewers can then obtain information about goods and services that are advertised in the commercial by, for example, connecting to the Internet while viewing the commercial and ordering the advertised products. A user interface for this e-commerce transaction can comprise a hypertext markup language (HTML) web page or pop-up window that is rendered on the display screen as an overlay over the current television program or in full screen. Picture-in-picture (PIP) features are also available, where the e-commerce window is displayed concurrently with a scaled window having the television program image (or vice versa).

Unfortunately, these implementations are non-ideal for many viewers. For instance, the viewer can initiate an e-commerce transaction while its corresponding commercial is showing. However, if the viewer does not complete the transaction and close the e-commerce window by the time the commercial ends, then the viewer typically will have to finish the transaction while the television program resumes (or defer the remainder of the transaction until later). Keeping the e-commerce window rendered on the display screen is distracting and annoying to viewers (e.g., the viewer who initiated the transaction and other viewers in the room) who wish to enjoy uninterrupted viewing of the television program.

Thus, while interactive television does provide new opportunities for commerce, it must be remembered that the primary purpose of television is to entertain or inform viewers through television programming. Barraging viewers with increased numbers of commercials in an effort to maximize commercial transaction opportunities will make viewers less inclined to watch television-viewers would rather watch television programs instead of commercials. Similarly, implementing "banner ads" or pop-up advertisement windows (as is commonly done on the Internet) will provide further annoyance to viewers who wish to enjoy uninterrupted television programming, rather than encourage them to initiate an e-commerce transaction.

GB-2309134 describes generating a television signal which includes at least two video windows, one containing advertising videos and the other containing text based information, such as news information from an external source, the videos take up only some of the visible lines of the signal, and at least presenting a ticker A on a second portion of the display screen, the second portion of the display screen being a minority portion relative to the first portion of the display screen; at a client terminal coupled to the display screen, presenting an advertisement in the second portion of the display screen. US2001/0001160 A1 describes an interactive entertainment system enables presentation of supplemental interactive content alongside traditional broadcast video programs. A browser uses a target specification stored in an EPG to activate a target resource containing the supplemental content for enhancing the broadcast program. The target resource contains display layout instructions prescribing how the supplemental content and the video content program are to appear in relation to one another when displayed. When the data from the target resource is downloaded, the viewer computing unit is responsive to the layout instructions obtained from the target resource to display the supplemental content concurrently with the video content program.

According to an aspect of the invention there is provided a method, comprising: presenting a ticker having a scroll region on a portion of a display screen capable to display a video image received from an interactive video casting system; presenting an advertisement within the scroll region of the ticker; and if a user responds to the presented advertisement, conducting a transaction related to the presented advertisement with the user within the scroll region of the ticker.

According to a further aspect of the invention, there is provided an apparatus for a video casting system, the apparatus comprising: at least one communication interface to receive an advertisement sent from the video casting system; a storage medium coupled to the communication interface to store a ticker software program; a processor, coupled to the storage medium and to the communication interface, to cooperate with the ticker software program to control presentation of the advertisement within scroll region of a ticker; and an output section to provide the ticker to a display screen capable to present the ticker concurrently with a received television program image, the advertisement being selected by the ticker software program to be inserted into the ticker based on context of subject matter of the received television program image.

According to a yet further aspect of the invention there is provided a video casting system, comprising: a source of ticker data; and an apparatus coupled to the source, the apparatus including: at least one communication interface to receive an advertisement sent from the video casting system; a storage medium coupled to the communication interface to store a ticker software program; a processor, coupled to the storage medium and to the communication interface, to cooperate with the ticker software program to control presentation of the advertisement within scroll region of a ticker in addition to the ticker data that is presented within the scroll region; and an output section to provide the ticker to a display screen capable to present the ticker concurrently with a received television program image, the advertisement being selected by the ticker software program to be inserted into the ticker based on context of subject matter of the received television program image.

According to a further aspect of the invention there is provided an article of manufacture, comprising: a machine-readable medium having instructions stored thereon to: present a television signal received from an interactive video casting system on a first portion of a display screen; present a ticker having a scroll region on a second portion of the display screen, the second portion of the display screen being a minority portion relative to the first portion of the display screen; at a client terminal coupled to the display screen, select an advertisement in context with subject matter of the television signal presented on the display screen; and present the selected advertisement within the scroll region of the ticker.

The machine-readable medium can include instructions stored thereon to: present information corresponding to the advertisement within the scroll region of the ticker, in response to user selection of the presented advertisement; and within the scroll region of the ticker, conduct a transaction related to the presented information with a user.

The machine-readable medium can include instructions stored thereon to select the advertisement based on profile information.

The machine-readable medium can include instructions stored thereon to provide the presented advertisement with a link to indicate the availability of a transaction related to the presented advertisement.

According to a further aspect of the invention there is provided an article of manufacture, comprising: a machine-readable medium having instructions stored thereon to: present a ticker having a scroll region on a portion of a display screen capable to display a video image received from an interactive video casting system; present an advertisement within the scroll region of the ticker; and conduct a transaction related to the presented advertisement with the user within the scroll region of the ticker, if a user responds to the presented advertisement.

The machine-readable medium can include instructions stored thereon to select the advertisement to present within the scroll region of the ticker to be in context with subject matter of the received video image.

The machine-readable medium can include instructions stored thereon to select the advertisement to present in the ticker based on profile data associated with the user.

According to a further aspect of the invention there is provided an apparatus, comprising: a means for receiving television signal from a video casting system and presenting the received television signal on a first portion of a display screen; a means for presenting a ticker having a scroll region on a second portion of the display screen, the second portion of the display screen being a minority portion relative to the first portion of the display screen; at a client terminal coupled to the display screen, a means for selecting an advertisement in context with subject matter of the television signal presented on the display screen; a means for presenting the selected advertisement within the scroll region of the ticker, including a means for presenting transaction information associated with the presented advertisement within the scroll region of the ticker.

The apparatus can further comprise a means for selecting the advertisement based on user profile information.

According to a further aspect of the invention there is provided a ticker for a video casting system, the ticker comprising: a plurality of selectable items, wherein at least one of the items comprises an advertisement that is in-context with subject matter of a video image from the video casting system that is displayed on a first portion of a display screen, the plurality of selectable items capable of being presented on a second portion of a display screen; at least one scroll region within the second portion of the display screen to present the selectable items, including the advertisement, presented therein; and a navigation control to select the advertisement presented within the scroll region to initiate a transaction related to the presented advertisement within the scroll region.

The ticker can further comprise an indicator provided along with the advertisement to indicate availability of the transaction.

The advertisement can be linked to supplemental information including text that is capable of being presented within the scroll region.

The advertisement can be inserted into the scroll region based on user profile information.

The transaction within the scroll region can be accompanied by concurrent presentation of a video communication on the display screen that is related to the transaction.

The selectable items presented within the scroll region can include transaction information selectable by a user in connection with performing the transaction.

The ticker can further comprise: a ticker user interface (Ul) to generate the scroll region that presents the advertisement and to provide the navigation control to select that advertisement presented within the scroll region; a ticker application program interface (API) in communication with the ticker (Ul) to control presentation of the advertisement by the ticker UI and to provide the selectable items to the ticker UI; and an advertisement application in communication with the ticker API to select and provide the advertisement to the ticker API.

The advertisement application can comprise a browser.

The supplemental information engine can comprise a software module to control at least one of a tuner of a client terminal for the video casting system to tune to a source of the advertisement, an input interface to connect to the source of the advertisement, and an input interface to retrieve the advertisement downloaded into local storage coupled to the client terminal.

The ticker can further comprise a feed manager in communication with the video casting system and with the ticker API to control transmission of ticker data, associated with the selectable items, from the video casting system to the ticker API.

According to a further aspect of the invention there is provided a method usable in a video casting system, the method comprising: receiving television signal from the video casting system and presenting the received television signal on a first portion of a display screen, wherein the display screen comprises part of a television for the video casting system, wherein a client terminal for the television is coupled to the display screen, wherein the video casting system includes a plurality of sources, which provide ticker data for a ticker capable of being rendered on a second portion the display screen, the plurality of sources being communicatively coupled to a plurality of broadcast centers, wherein at least one of the broadcast centers is coupled to a server capable to provide the ticker data from the sources to the client terminal, and wherein the video casting system is capable to provide the ticker data to the client terminal via different communication channels, including at least one of a plurality of television broadcast channels, an out-of-band channel, and a communication channel with a communication network; presenting the ticker with a scroll region on the second portion of the display screen, the second portion of the display screen being a minority portion relative to the first portion of the display screen; at the client terminal coupled to the display screen, selecting an advertisement in context with subject matter of the television signal presented on the display screen; and presenting the selected advertisement within the scroll region of the ticker.

The method can further comprise: responsive to user selection of the presented advertisement, presenting information corresponding to the advertisement within the scroll region of the ticker; and within the scroll region of the ticker, conducting a transaction related to the presented information with a user.

The method can further comprise selecting the advertisement based on profile information.

According to a further aspect of the invention there is provided a video casting system, comprising: a source of ticker data including: a feed server to receive a plurality of feeds of ticker data and having a feed engine to manipulate the ticker data received from the feeds; a production server coupled to the feed server to receive the ticker data manipulated by the feed engine, and coupled to a database having tables for the manipulated ticker data received from the feed server, the production server being capable to change a format of the manipulated ticker data to a format compatible with client terminals configured to present a screen interface on a display screen; and a distribution server to send the manipulated ticker data having the format compatible with the client terminals; and an apparatus coupled to the distribution server of the source, the apparatus including: at least one communication interface to receive an advertisement sent from the video casting system; a storage medium coupled to the communication interface to store a ticker software program; a processor, coupled to the storage medium and to the communication interface, to cooperate with the ticker software program to control presentation of the advertisement within scroll region of a ticker in addition to the ticker data that is presented within the scroll region; and an output section to provide the ticker to a display screen capable to present the ticker concurrently with a received television program image, the advertisement being selected by the ticker software program to be inserted into the ticker based on context of subject matter of the received television program image, the ticker software program including code to present transaction information, related to the inserted advertisement, within the scroll region of the ticker and in response to user selection of the inserted advertisement.

A source of the video can comprise part of a satellite television delivery system.

A source of the video can comprise part of an interactive television system.

The ticker software program can further include code to select the advertisement based on user profile information.

part of the remaining lines, or the vertical blanking interval, are encoded with non-video data representative of programme schedule information for a number of channels. At the receiving end, the encoded data is decoded, mapped onto locally generated channel numbers and displayed as video information in the lines of the video signal which are not used by the other video windows. A locally generated ticker may be used to display local information such as traffic news or emergency warnings.

US 2001/001160 describes an interactive entertainment system which allows the presentation of supplemental interactive content along side broadcast video programs, such as television shows and movies. The programs are broadcast in a conventional manner. The supplemental content is supplied as part of the same program signal over the broadcast network, or separately over another distribution network. A viewer computing unit located at the viewer's home presents the program and supplemental content to a viewer. When the viewer tunes to a particular channel, the viewer computing unit consults an electronic programming guide (EPG) to determine if the present program carried on the channel is interactive. If it is, the viewer computing unit launches a browser which uses a target specification stored in the EPG to activate a target resource containing the supplemental content for enhancing the broadcast program. The target resource contains display layout instructions prescribing how the supplemental content and the video content program are to appear in relation to one another when displayed. When the data from the target resource is downloaded, the viewer computing unit is responsive to the layout instructions obtained from the target resource to display the supplemental content concurrently with the video content program.

WO 99/56473 describes an interactive television program guide for a set-top box in which advertisements may be displayed in program listings display regions on program guide screens. The program listings display regions may be browse displays or flip displays. The program guide screens contain video for the current channel to which the user is tuned. The program listings display regions containing the advertisements may be overlaid on top of the current channel. Alternatively, the video for the current channel may be provided in a reduced-size video window. Text and graphics advertisements may be distributed over an out-of-band channel using out-of-band modulation and video advertisements may be distributed in the same way or more efficiently using one or more separate channels of the communication path from the television distribution facility to a set top box. The advertisements may be used to promote television programs and conventional goods and services. Advertisements may be selectable by a user using remote control keys to move a movable highlight. When a user selects an advertisement, the program guide provides the user with an opportunity to order products or services, request information, set reminders for upcoming programs, view program descriptions, record programs, or take other such actions.

An aspect of the invention provides a method according to claim 1.

A further aspect of the invention provides an apparatus for a video casting system according to claim 9.

A further aspect of the invention provides a video casting system according to claim 13.

The invention is set out in the appended set of claims; the further examples called embodiments in the description or called aspects of the invention in the description are illustrative examples.

Non-limiting and non-exhaustive embodiments of the present invention are described with reference to the following figures, wherein like reference numerals refer to like parts throughout the various views unless otherwise specified.
Figure 1 is a block diagram of an example interactive video casting system that can implement advertisement in a ticker in accordance with an embodiment of the invention.
Figure 2 is a block diagram illustrating example components that can be included in the system of Figure 1 to provide a ticker usable for advertisements in accordance with an embodiment of the invention.
Figure 3 is a block diagram of an embodiment of a client terminal that can be used in the system of Figure 1 to present an advertisement in a ticker.
Figure 4 is an example screen shot in conjunction with a remote control for implementing one embodiment of the invention.
Figures 5-6 are additional screen shots depicting advertisements inserted in a ticker in accordance with various embodiments of the invention.
Figure 7 is a block diagram illustrating components that can interact to present an advertisement inserted in a ticker according to an embodiment of the invention.
Figure 8 is a flowchart illustrating automatic insertion of advertisement into a ticker according to an embodiment of the invention.

### DETAILED DESCRIPTION

Embodiments of techniques to automatically insert advertisements into a ticker, including conducting corresponding transactions within the ticker, are described herein. In the following description, numerous specific details are given to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

As an overview, an embodiment of the invention addresses the previously described advertisement problems by providing advertisements in a ticker that can be implemented in a television system, such as an interactive television system. Advertisements (including e-commerce opportunities) can be automatically inserted into the ticker, alternatively to being presented in windows or banners on the television display screen. Because viewers are relatively used to seeing tickers along with their television programming, placing advertisements within the ticker itself provides a less intrusive technique to expose viewers to transaction opportunities (e.g., a ticker occupies a minority portion of the display screen), as compared to increasing the number of television commercials or showing banner advertisements or advertisement windows that interfere with the television program viewing experience.

The advertisements within the tickers may be provided with hypertext links or other types of links. If selected, these links provide a connection to a merchant web site, an interactive shopping channel or other synthetic channel, or other location where the viewer can conduct a transaction or obtain more information on advertised products. The viewer may conduct the transaction within a user interface having the ticker, rather than through a separate transaction window. This further reduces interference with television programming (e.g., viewer distraction) because the transaction is performed in the minority space occupied by the ticker on the display screen, which is a location where viewers readily accept presentation of information. HTML-to-text conversion or other suitable conversion technique, if needed, can be used to convert an original format of the advertisement into a format compatible with information to be displayed in the ticker.

The advertisements are context-sensitive in that they relate to the subject matter of the television program currently being shown. This correlation is provided through the use of triggers.

The advertisements presented in the ticker can be targeted based on implicit or explicit profiling of the viewer.

Viewer response to an advertisement presented in a ticker can launch a videophone or web cam phone communication with the participating merchant, in situations where the viewer does not mind concurrently viewing the television program and video communication on the same display screen.

Moreover, the term "ticker" as used herein is intended to generally describe a presentation of information on a display screen, such as a display screen for a television, and is not intended to be limited solely to implementations where the information is presented in a manner to exactly mimic a stock market ticker. In one embodiment, the ticker can comprise text and graphics that are scrolled or otherwise presented in a region of the display screen, along with a television image (such as an image from a live broadcast or from a recorded program). Various embodiments will be described herein in the context of "scrolling" the ticker information. It is to be appreciated that the term "scrolling" is merely illustrative of a technique to present dynamic ticker information, and that this term, in some embodiments, can encompass implementations where the ticker information is presented via screen segments of information, text segments, one-line-at-a-time, one-sentence-at-a-time, one-word-at-a-time, and the like, rather than the traditional format of one-character-at-a-time typically associated with stock market tickers. Moreover, the term "scrolling" is used generically herein to refer not only to vertical movement from bottom to top, but also movement from right to left (often referred to as "crawl") or movement in other directions.

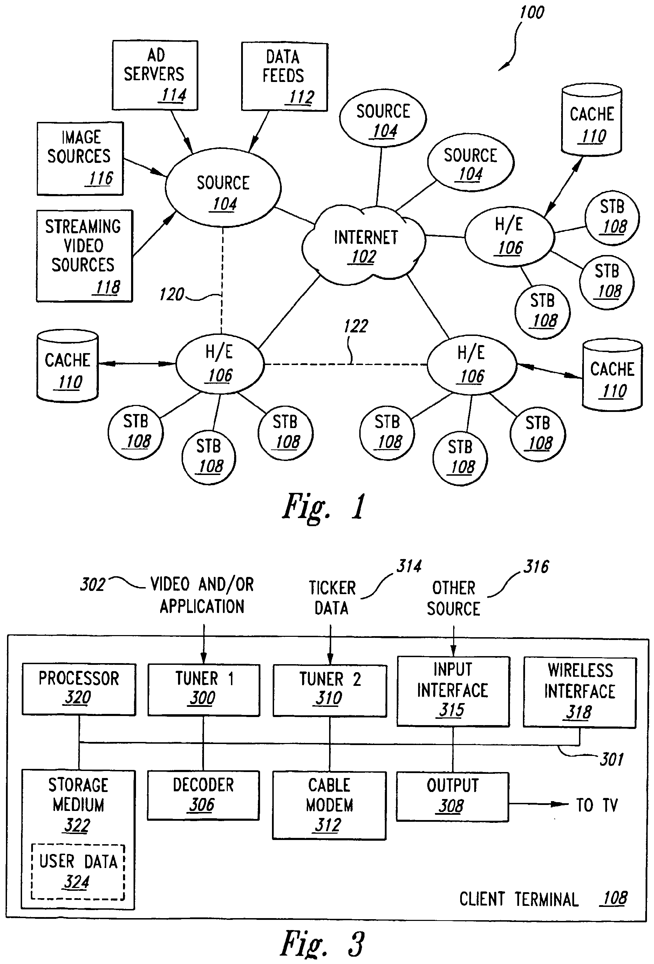

Figure 1 shows an example of an interactive video casting system 100 for distributing ticker content, Internet content, and television content according to an embodiment of the invention. In accordance with an embodiment of the present invention, the system 100 can be integrated with a cable television distribution system to provide interactive television tickers. The system 100 includes an Internet 102, a plurality of content sources 104, a plurality of distribution centers (depicted as the head-ends or H/Es 106), and a plurality of client terminals 108 (depicted as set top boxes). In addition, a content source 104 is depicted as receiving data from data feeds 112, advertisement servers 114, image sources 116, and streaming video sources 118. The content source 104 may also receive content from a broadcast video source. For the sake of clarity and to avoid clutter, not all of these sources are shown in Figure 1 for each content source 104.

The plurality of content sources 104 is coupled to the Internet 102. For example, a content source 104 may comprise a web site portal such as Go2Net.com™, or a news web site such as CNN.com™, or other types of sources. Each content source 104 may have various data feeds 112, servers 114, and sources 116/118 coupled to it.

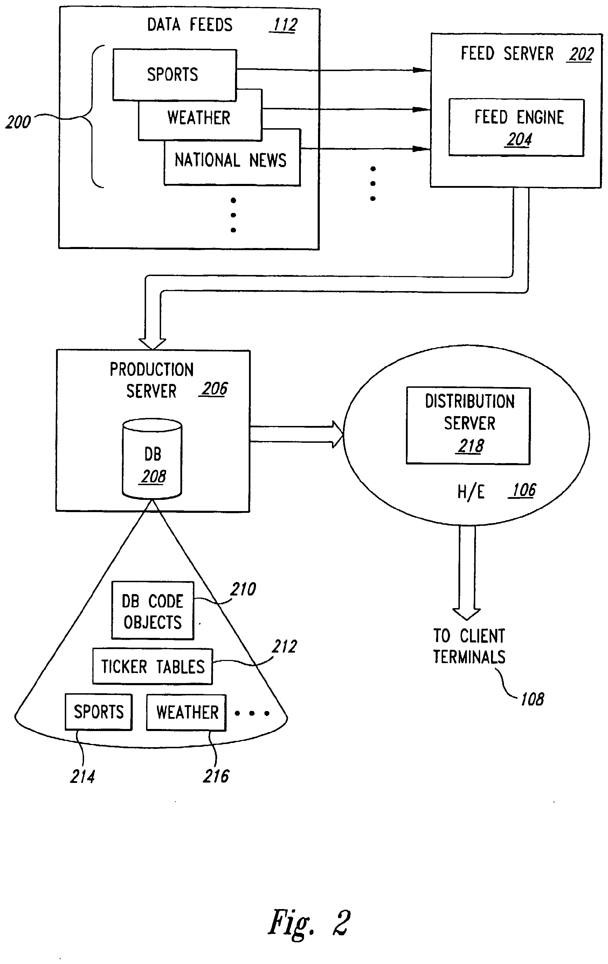

For example, news or stock quote feeds 112 (including data for tickers) may be fed into the content source 104. Servers 114 may provide advertisements for insertion into multimedia content delivered by the content source 104 in accordance with one embodiment of the invention. Sources 116 and 118 may provide images 116, streaming video 118, and other content to the content source 104. Various other feeds, servers, and sources may also be coupled to the content source 104 of Figure 1. An example configuration of components that can be integrated with the system 100 to provide ticker information to client terminals 108 is shown in Figure 2.

The Internet 102 comprises a network of networks and is well known in the art. Communications over the Internet 102 can be accomplished using standard protocols such as transmission control protocol/internet protocol (TCP/IP), hypertext transfer protocol (HTTP), file transfer protocol (FTP), or other protocols. Web sites, such as merchant web sites, can be included within or otherwise be in communication with the Internet 102. The Internet 102 is coupled to the plurality of distribution centers 106, and each distribution center 106 is in turn coupled to a plurality of client terminals 108, which may comprise a set top box, a PC, an interactive television set, or another type of communication device or display device.

In alternative or in addition to the Internet 102 being used to distribute multimedia content (including ticker data and advertisements) from the content sources 104 to distribution centers 106, communications channels or networks 120 (which can include satellite delivery sources/networks) apart from the Internet 102 may couple one or more content sources 104 to one or more distribution centers 106. One example of such an alternate path for communications is illustrated by a first dashed line 120 in Figure 1. Alternately or additionally, peering connections may exist between distribution centers 106. One example of such peering is illustrated by a second dashed line 122 in Figure 1. Other communications configurations are also possible.

Caches 110 may be provided at (or otherwise coupled to) the distribution centers 106. Such caches 110 may be used to increase the performance in the delivery of multimedia content (including ticker data and advertisements) to the client terminals 108. For example, larger files for video and other high bandwidth content may be stored in such caches 110, which may be closer-in-time to the client terminals 108 than to the content sources 104. In addition, reliability and guaranteed bandwidth may be provided because the Internet 102 is not in-between such caches 110 and the client terminals 108. In one embodiment, the caches 110 or other storage media in the system 100 can store ticker information and advertisements, rather than or in addition to having such information buffered, cached, or otherwise stored at the client side.

In an embodiment, servers may be present in the distribution centers 106, with such servers including or being coupled to the caches 110 or other storage media. Alternatively or in addition, these servers may be located remotely from but still communicatively coupled to the distribution centers 106, via the Internet 102 or other communications channels or networks. Examples of such servers that can be used in connection with providing ticker information to client terminals 108 are shown in Figure 2.

In accordance with one embodiment of the invention, different or multiple portals may be used to access the information provided through the interactive video casting systems of Figure 1, based on the type of client terminal being used by the end user. That is, for example, a television portal may be provided for an end user that uses a television set coupled to the client terminal 108 to access the information. A PC portal may be provided for an end user that uses a PC to access the information. Portals can be provided for end users that use cellular telephones, personal digital assistants (PDAs), audio devices, and the like to access the interactive video casting system 100 of Figure 1.

Such portals may be provided in several possible ways. In one embodiment, the client terminal (e.g., the end user's display device or audio device) can be suitably configured with an adapter that includes hardware and software. The adapter converts the television signals, the Internet or web page content, or other information provided from the interactive video casting system into a digitized format or other format that is compatible with the operational features of the particular client terminal 108.

In another embodiment, a cable service provider can deliver signals having different formats to the various client terminals 108, with the client terminals not necessarily having special adapters. Therefore, as an example, the cable service provider or other party can generate/deliver information (e.g., television programming, web page content, ticker information, and the like) having a format that is compatible for end users that receive the information via a television set. The cable service provider or other party can also generate/deliver the same information (e.g., simultaneously with the television portal on the same communication link, separately on a different communication link, on-demand independent of the television portal, and the like) using a format that is compatible with end users that receive the information via PCs, PDAs, cellular telephones, and the like. Thus, the term "interactive video casting system" is used to describe generally a system that can deliver video information and other information over any network and any network-compatible device by broadcasting, multicasting, or unicasting. An "interactive television system" is one type of or one means of access to an "interactive video casting system."

Figure 2 is a block diagram illustrating example components that can be included in the system 100 of Figure 1 to provide data for tickers in accordance with an embodiment of the invention. The data feeds 112 include a plurality of different ticker data feeds 200 that provide a variety of different topical data that can be displayed in a ticker. For instance, the different ticker data can include sports data, weather data, national news, and so forth. The sources that can provide this data can include entities such as Reuters™, The Sporting News™ (TSN), Associated Press™ (AP™), and others. In one embodiment, the ticker data from the data feeds 200 comprises "raw" unformatted data (e.g., data with minimal or no formatting or graphics).

The raw ticker data is provided to a feed server 202. In an embodiment, the feed server 202 operates as a content aggregator that pulls or otherwise receives the raw ticker data from the data feeds 200. The feed server 202 also performs data manipulation on the received ticker data to manipulate the data into a database format so that the data can be indexed and stored. A feed engine 204, which can be embodied in software or other machine-readable instructions stored on one or more machine-readable media according to an embodiment, can reside and run in the feed server 202 to perform at least some of this data manipulation.

The feed server 202 is coupled to provide the manipulated ticker data to a production server 206. The production server 206 includes or is otherwise coupled to a database 208. The feed engine 204 calls on the database 208, and instructs the database 208 where to place the various ticker data. For example, the database 208 can include a plurality of database code objects 210 that cooperate with ticker tables 212 (such as a sports table 214, a weather table 216, and so forth) to index or store ticker data. The feed engine 204 calls the database 208 and identifies the database code objects and ticker tables where the ticker data is to be stored.

The various components of the database 208, such as the ticker tables 212, can also be configured in a manner that optimizes the organization and distribution of the ticker data. For example, ticker data unique to various geographic regions can be segregated from or otherwise identifiable from each other, so that ticker data that is relevant to only particular client terminals 108 need not be broadcast to all client terminals. For instance, California weather information can be segregated from Oregon weather information in the database 208 in a manner that client terminals 108 of California users do not receive Oregon weather information, unless specifically requested. This feature improves transmission efficiency and transmission time, since the bandwidth of communication paths to certain client terminals 108 are not clogged by non-relevant ticker data.

In an embodiment, the production server 206 can also perform data manipulation, such as before the data is stored in the database 208, while it is stored in the database 208, or after the data is retrieved from the database 208 for transmission to client terminals 108. For instance, the production server 206 can perform data manipulation to place the ticker data into a format that is "consumable" or otherwise compatible with operating software of the client terminals 108. For instance, the production server 206 can place the ticker data into formats such as hypertext markup language (HTML), extensible markup language (XML), or other suitable formats.

The production server 206 is coupled to provide ticker data from the database 208 to one or more distribution servers 218, which may be located in or otherwise communicatively coupled to a distribution center 106 (such as a head-end). The distribution server 218 operates to provide the ticker data to the client terminals 108 via several possible communication paths or channels, as will be described with reference to Figure 3.

It is to be appreciated that the components shown in Figure 2 are merely illustrative of the various components of one embodiment that can be used to provide ticker information. For example, other embodiments can use more or fewer servers, as well as different components, to perform the various operations. Moreover, the various servers and their components (such as the feed engine 204 and the database 208) can be distributed elsewhere in the system 100, instead of or in addition to the locations shown in Figure 2. There may be multiple feed servers 202, production servers 206 and databases 208, distribution servers 218, and so on to account for load balancing, redundancy in case of outages or broken connections, and other factors that can affect distribution of ticker information.

Figure 3 is a block diagram of an embodiment of a client terminal 108 for the system 100 of Figure 1 that can implement an embodiment of the invention to present a ticker having advertisements inserted therein. For the sake of simplicity of illustration and explanation, only the components that are germane to understanding an embodiment of the invention are shown in Figure 3. It is understood that the embodiment of the client terminal 108 shown in Figure 3 can have other components different than or in addition to what is shown. Moreover, the various illustrated components may be suitably combined in some embodiments, instead of being separate. It also should be noted that the client terminal 108 is only one embodiment of the invention and that some or all of the components described as embodied in the client terminal 108 can be incorporated into a client television rather than in a separate device. A bus 301 is shown symbolically to depict coupling between the various components.

To briefly describe an embodiment, the client terminal 108 receives ticker data and advertisement data from the distribution server 218 or other sources, and then performs the appropriate processing of the data to allow the data to be displayed in a ticker on a display screen of a television set. The client terminal 108 can be passive in that it receives the ticker data (as well as updates) and when the data is sent by the distribution server 218, independently of whether the client terminal 108 requested the ticker data (e.g., the distribution server 218 "pushes" the data to client terminals 108). Alternatively or in addition, the client terminal 108 can poll or otherwise explicitly request the data from the distribution server 218, including polling the distribution server 218 for updated data (e.g., the client terminal 108 "pulls" the data from the distribution server 218). In some embodiments, both push and pull mechanisms may be involved.

Once it receives the ticker data from the distribution server 218, the data can be buffered or cached (if appropriate), and processed for presentation on the display screen of the television set. In an embodiment, ticker software in the client terminal 108 can work in conjunction with a ticker template or other ticker user interface to display the ticker (and its ticker items) in the appropriate scrolling layout, format, locations, time intervals, topics, content, and so forth. In one embodiment where the ticker data is obtained from the Internet 102, this ticker software can comprise browser-based software or other software capable to cooperate with a web browser. According to various embodiments, the ticker can be generated and made interactive through Flash, C++, Java, HTML, or other suitable code or software.

The client terminal 108 comprises a first tuner 300 to tune to a Moving Pictures Experts Group (MPEG) stream 302 or other video source. The stream 302 may include video, live transmission, and/or application code, including corresponding text and graphic resources. In an embodiment where tickers are provided in an integrated manner along with the video signal, the ticker can be received by way of the stream 302. One skilled in the art will recognize that there will be a plurality of streams 302, depending on the number of channels and programs that the cable service provider makes available to the client terminal 108.

The first tuner 300 is coupled to a decoder 306 that decodes the video, application, and/or audio into a format that is compatible with a television set coupled to the client terminal 108. The client terminal 108 may include a second tuner 310. The second tuner 310 can work in conjunction with a cable modem 312 to obtain ticker data 314 from the Internet 102, such as via a Data Over Cable Service Interface Specifications (DOCSIS) connection with the distribution server 218. In addition to the ticker data 314, advertisements and Internet content can also be received by the client terminal 108 by way of the DOCSIS connection through the second tuner 310 and the cable modem 312. In one embodiment, the second tuner 310 can be used to obtain such advertisement data from a server (such as that used by a merchant or advertiser), remote database, Internet location or web site, or other source depicted in Figure 1.

In addition, the client terminal 108 includes or is coupled to an input interface 315, through which other sources 316 of ticker data and advertisement data can be provided to the client terminal 108. An example of the input interface 315 comprises an out-of-band tuner that can be used to tune to ticker data or advertisements that are provided via an out-of-band channel. In an embodiment, the out-of-band channel(s) can comprise one or more low-bandwidth frequencies carried on the same coaxial cable used to provide the MPEG streams and the Internet content. The out-of-band channel(s) tuned to by the input interface 315 to receive ticker data or advertisements can be used alternatively or in addition to the DOCSIS channel tuned to by the second tuner 310 in such an embodiment. In one embodiment, transactions in response to an advertisement may be communicated to and from the client terminal 108 via the input interface 315.

Further alternatively or in addition, the input interface 315 can comprise another television broadcast tuner (such as the first tuner 300) to tune to one or more channels that may be carrying ticker data or advertisements. For example, ticker data (including updates) and advertisements may be broadcast in one or more channel frequencies specifically dedicated for transmission of such data to client terminals 108. Thus, as an illustration, the first tuner 300 can tune to a channel showing a television program, while the input interface 315 is tuned to receive data (in the form of packets, for example) from a ticker channel or advertisement channel to allow a ticker having inserted advertisements to be simultaneously shown on the same television screen as the television program.

Yet another example of the input interface 315 is an interface to receive outputs of recording devices such as a PVR or a digital video recorder (DVR) that may have ticker data or advertisements, which may be received via download. Alternatively or in addition, the input interface 315 can comprise a communication interface, such as an Ethernet connection, a digital subscriber line modem, a wireless communication interface, and so forth, which can provide a link to the server 218 to receive ticker data and advertisements, for instance.

An embodiment of the client terminal 108 may include a processor 320 to control operation of the various components shown in Figure 3. The processor 320 may work in conjunction with ticker software or other machine-readable instructions stored on at least one machine-readable storage medium 322. Such ticker software may cooperate with the processor 320 to present ticker data in a ticker template or other screen interface or user interface, configure the format and layout of the ticker displayed on the display screen of the television, select and insert an advertisement in a ticker, process received user commands related to responding to an advertisement and conducting a related transaction, and other operations. In an embodiment, the ticker software can be pre-installed in the client terminal 108. In another embodiment, the ticker software may be installed by way of download from the system 100.

An audio and video output subsection 308 of the client terminal 108 receives decoded video and/or other applications (including ticker templates and the ticker data presented therein), and provides the decoded information to a television set. A wireless interface 318 operates to receive commands from a user input device (such as a wireless remote control). Such commands can include user commands to respond to an advertisement and perform a subsequent transaction, in an embodiment. The wireless interface 318 provides these commands to the processor 320 so that the processor 320 can cooperate with the ticker software to perform the corresponding operation.

In an embodiment of the invention, the storage medium 322 can also store user data 324 related to operation of the ticker. For instance, the user data 324 can include an implicit or explicit viewer profile that can be used to select advertisements targeted to the viewer. An explicit profile can be created by the viewer, and can specify information such as the viewer's age, hobbies, gender, occupation, and so forth. An implicit profile may be created by collecting viewer behavior data, such as channels watched, programs watched, Internet browsing activities, e-commerce transactions conducted, merchant web sites previously used, and so forth. In any of these storage locations, multiple sets of user data 324 may be stored, such as in implementations where multiple users in a household log into a same client terminal 108.

The storage medium 322 can include cache(s), buffer(s), or other types of storage locations where ticker data, advertisements, or other information may be stored. For example, received sports scores can be stored in the storage medium and retrieved during the appropriate times during the course of the scrolling of the ticker. The ticker data stored in the storage medium 322 can be replaced as updates are received from the distribution server 218. In one embodiment, less time-dependent ticker information (e.g., information that need not necessarily be updated several times per day), including graphics for weather displays, game schedules, some types of advertisements, and the like, can be downloaded to the storage medium 322 during non-peak television viewing periods (such as late at night), and then retrieved from the storage medium 322 when that piece of information is appropriate for presentation in the ticker.

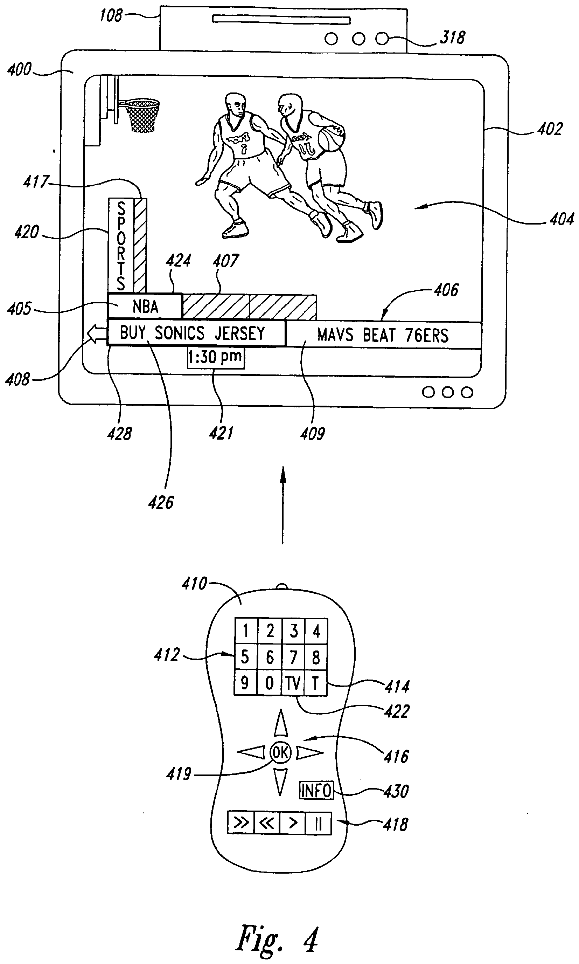

Figures 4-6 are television screen shots depicting operation of a ticker having advertisements automatically inserted therein, in accordance with various embodiments of the invention. For simplicity of explanation, not all of the possible types of advertisement insertions and related transactions are shown or described, as such other possible information can be ascertained by examination of the features specifically shown in Figures 4-6. Moreover, it is to be appreciated that the format, layout, direction, content, and other characteristics of the ticker shown in Figures 4-6 are merely illustrative and that variations are possible.

In Figure 4, a television set 400 is coupled to the client terminal 108 in a manner that allows a display screen 402 of the television set to show a television program 404. The television program 404 in this example is a basketball game. A ticker 406 is shown scrolling across the bottom of the display screen 402. The ticker 406 can be in a screen interface that overlays the television program 404, or the television program 404 may be scaled appropriately on the display screen 402 to fit the screen interface for the ticker 406 and thereby avoid the need for an overlay. An embodiment of the ticker 406 displays the current time 421.

In the example of the ticker 406, the ticker 406 is scrolling from right to left (as symbolically depicted by an arrow 408). It is to be appreciated that in other embodiments, the ticker 406 may be scrolling in different directions and may also be positioned differently on the display screen 402. For the sake of illustration, the ticker 406 is shown as being set in a cycle where it is presenting NBA™ basketball news (e.g., "Mavs beat 76ers." is a moving ticker text item 409 that is being displayed in a scroll region for a "Sports" category 420 and an NBA™ subcategory 405). There may be any suitable number of categories 417 and subcategories 407 through which the user can navigate. A navigation control 424, such as a stationary center focus box or movable selection rectangle, can be used to make navigation selections.

Figure 4 illustrates one embodiment of the invention where an advertisement 426 has been inserted into the ticker 406 and is directly related to or otherwise in context with the television program 404. More specifically, assuming that the television program 404 is a live Sonics basketball game, the advertisement 426 can present a purchase opportunity that is directly related to the subject matter of the television program (e.g., an advertisement to purchase a Sonics jersey in this example). The advertisement 426 can be presented within the scroll region of the ticker 406 in bold, in a different color (which may indicate a hyperlink or other link), accompanied with an icon, underlined, or via some other technique to alert the viewer that he can interact with the advertisement 426 to perform a purchase.

When the advertisement 426 scrolls into a center focus box 428, the viewer can then press an INFO button 430 on a user input device (such as wireless remote control 410) so as to view additional details of the advertisement for purposes of beginning a purchase transaction. Alternatively or in addition, the viewer can press a "BUY" button (not shown) on the remote control 410 to view additional information. In one embodiment, responding to the advertisement 426 in this manner results in access of additional information via a hyperlink or other link (which may include channel tuning).

Figure 4 illustrates an example of an implementation where the advertisement 426 is directly correlated to the content of the television program 404, such as via use of Advanced Television Enhancement Forum (ATVEF) triggers or other triggering mechanisms. For instance, identification (ID) information or other information can be placed in the vertical blanking interval (VBI) of signal the television program 404 in a manner that identifies the teams in the game, the type of sport, the location of the game, time of the game, and so forth. Such ID information can be extracted and processed, based on techniques familiar to those skilled in the art having the benefit of this disclosure, to identify and select context-sensitive advertisements to present in the ticker 406. In the example of Figure 4, triggers from the signal of the television program 404 have been processed by software to select the advertisement 426 (for clothing) of one of the teams involved in the basketball game.

The wireless remote control 410 is in communication with the client terminal 108 (via the wireless interface 318) to perform conventional television-viewing operations and also to control operation of the ticker 406 according to an embodiment of the invention, including operations associated with selection of an advertisement for a transaction and the resulting interaction. The remote control 410 includes an alphanumeric keypad 412 that the viewer can use to select television channels or to conduct a transaction according to one embodiment (such as making menu selections of advertised products, entering a PIN, and the like). Buttons 418 can comprise buttons that are similar to play, rewind, fast forward, pause, etc. buttons usable for recording devices or for ticker operations. In an embodiment, the remote control 410 can include a ticker button 414, which if pressed, causes a command to be sent to the client terminal 108 to instruct the ticker software to render the ticker 406 on the display screen 402. If the ticker button 414 is pressed again, the ticker 406 is taken off the display screen 402. Alternatively or in addition, a TV button 422 can be pressed to dismiss the ticker 406.

In one embodiment, selection of the ticker category, subcategory, or item (including those that are presented as advertisements or as part of the accompanying transaction) may be performed via the navigation control 424 in the form of a stationary center focus box into which ticker items scroll, or in the form of a selection rectangle movable via arrow keys 416 on the remote control 410, with both navigation techniques in conjunction with pressing an OK button 419 or the INFO button 430. The center focus box 428 can also be similarly used in conjunction with the buttons of the remote control 410.

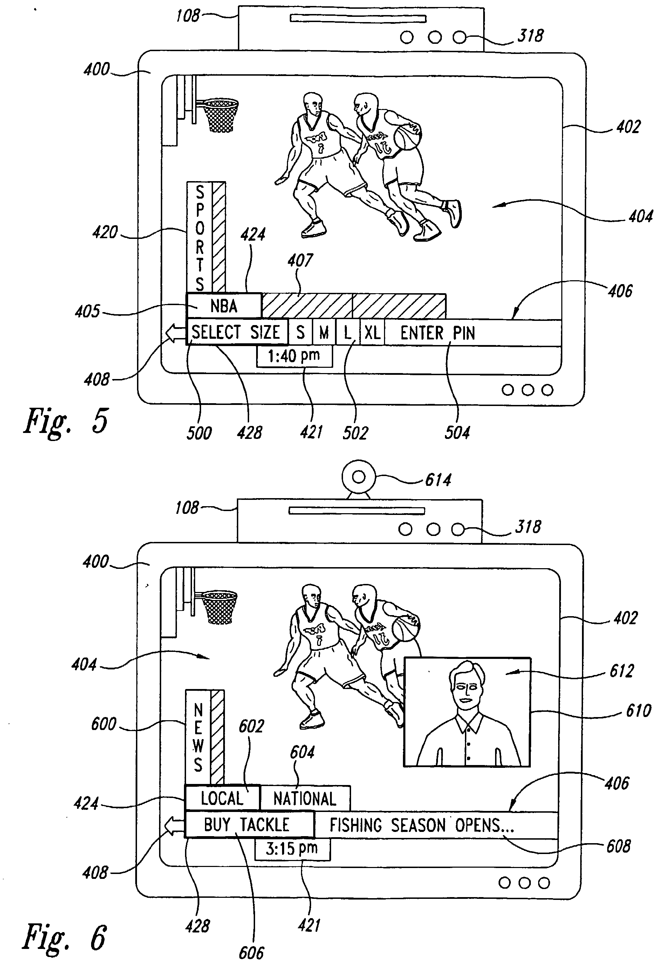

Figure 5 illustrates an example when the viewer has clicked the INFO button 430 (or the OK button 419) after the advertisement 426 has scrolled into the center focus box 428. The viewer may have performed this action to view additional information about the advertised product, to actually buy it, or both. In an embodiment, the ticker 406 scrolls transaction information within its scroll region so that the viewer can perform the transaction within the ticker, as opposed to launching a separate window or web page.

For example, ticker items can scroll that prompt the viewer to make selections, such as a "Select Size" ticker item 500 to alert the viewer to select a size for the desired jersey. The Select Size ticker item 500 is followed by sizes that the viewer can select, which are represented as individually selectable ticker items 502 for small, medium, large, and extra large. When the appropriate size has scrolled into the center focus box 428, the viewer can press the OK button 419 to make the selection. Similar other selections can be scrolled by the ticker 406, such as color, quantity, other products, and so forth. These items may be selected when they scroll into the center focus box 428, navigated to via a selection rectangle used in conjunction with the arrow keys 416, selected from a list by pressing the alphanumeric key(s) 412 to enter a number corresponding to a selection number in the list, selected from a drop-down menu, or via some other suitable selection technique.

Alternatively or in addition, a text entry tool can be provided if necessary for text entry of information such as address, credit card number, name, monogram, messages, remarks, etc., if such information is needed for the transaction. For instance, the ticker 405 might scroll an item 504 prompting the viewer to enter a personal identification number (PIN). Once the item 504 comes into center focus, the viewer can then press the OK button 419 and the appropriate alphanumeric keys 412 on the remote control 410 (or on an on-screen menu) to enter the PIN. The PIN may or may not be displayed within the scroll region of the ticker 406 as it is entered. Once obtained, the PIN can be used to identify the viewer, his address, credit card, etc.

After the viewer has responded to all of the items scrolled by the ticker 406 that require a response, the viewer-entered information is sent to the merchant. The ticker 406 can then continue to scroll additional advertisements, in the event that the viewer wishes to make additional purchases or continue perusing advertised products. Accordingly, as shown and described above, providing the capability to present advertisements within the ticker 406 and the capability to conduct the resulting transaction within the ticker 406 results in little or no interruption of the television program 404, since the ticker only occupies a minority portion of the display screen 402.

Figure 6 illustrates an example of an advertisement 606 inserted into the ticker 406 based on viewer profile information. Figure 6 also illustrates an alternative or additional technique to perform the resulting transaction. In Figure 6, the ticker 406 is scrolling headlines from a news category 600 while the basketball television program 404 is playing (e.g., the ticker 406 is scrolling ticker items unrelated to the television program 404). Since the navigational control 424 is positioned on a "Local" news subcategory 602, the ticker 406 currently scrolls a local headline 608 related to fishing. Once local headlines finish scrolling, the ticker 406 may scroll national headlines from a "National" news subcategory 604.

In Figure 6, the inserted advertisement 606 is an advertisement for fishing tackle, since the viewer profile indicates that the viewer likes fishing, the outdoors, or seafood, for instance. The advertisement 606 need not necessarily have been correlated to the fishing headline 608. Rather, the advertisement 606 is selected for presentation in the ticker 406 to target the viewer. In embodiments where an explicit profile was used to select the advertisement 606, the explicit profile was previously created by the viewer and stored, and specified the viewer's hobbies, interests, age, favorite foods, or other information. An implicit profile may be created based on the viewer's viewing habits, previous on-line purchases (e.g., if the viewer has made sporting goods purchases in the past), Internet-surfing habits (e.g., if the viewer commonly visits fishing web sites), click history, and so forth.

In one embodiment, and in particular where the viewer does not mind viewing another window along with the current television program 404, a window 610 can be rendered. The window 604 can comprise a pop-up window, overlay, PIP window, full-screen window, or a tuned-to channel. In an embodiment, the window 604 can display a video image 612 of a sales representative (live or recorded) that can assist the viewer with the transaction. For instance, a web cam or videophone communication can generate the video image in the window 604. For face-to-face communication between the viewer and sales representative, a camera 614 (such a web camera) can be located adjacent to the client terminal 108. The subject matter of the video communication transaction may or may not be in-context with the subject matter of the television program 404.

Various models can be used to present advertisements in the ticker 406, whether in-context or not to the television program 404. In a passive model, the advertisements presented in the ticker 406 are time-based. That is, the configuration of the ticker, the service provider, a broadcaster, or other party or component defines when advertisements are to be scrolled in the ticker 406. Examples of these definitions include presenting an advertisement every 5 minutes, every half hour, each time the ticker 406 cycles between subcategories or categories, and so forth.

In an active model, advertisements are displayed in the ticker 406 based on viewer action, for instance. Presentation of an advertisement in response to a viewer action can be based on viewer actions such as, but not limited to, turning on the television set 400, logging into an interactive service account, invoking the ticker 406, changing a television channel, invoking an electronic program guide (EPG), clicking on something in the ticker, navigating within the ticker, pressing one of the buttons on the remote control 410 (such as the INFO button 430), and others.

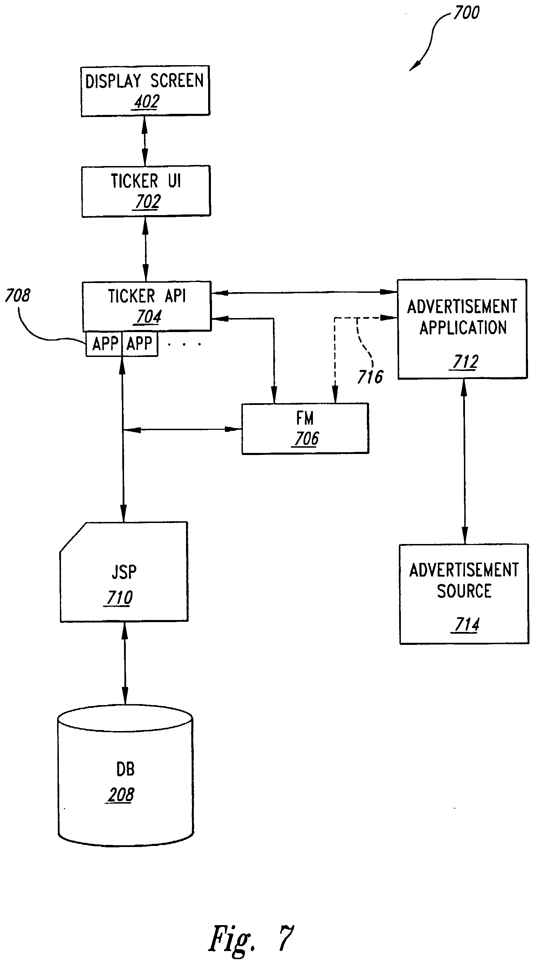

Figure 7 is a block diagram 700 illustrating components that can interact to present advertisements in the ticker 406 according to an embodiment of the invention. At least some of the components of Figure 7 can be embodied in software or other machine-readable instruction stored on a machine-readable medium, such as the storage medium 322. An embodiment of the ticker software includes a ticker user interface (Ul) 702 that presents the ticker 406 on the display screen 402, as well as being able to receive and process viewer responses. A ticker application program interface (API) 704 interacts with the ticker UI 702 to control what the ticker UI displays, how to display, when to display, and so forth. In an embodiment, the ticker API 704 provides advertisement data to the ticker UI 702, as well as processing user commands that interact with the presented advertisements (if necessary) and that are entered via the ticker UI 702.

The ticker API 704 interfaces with a plurality of applications 708. These applications can include a sports application, news application, weather application, or other applications associated with categories that the ticker 406 can present to the viewer. A feed manager (FM) 706 (or other software controller) operates to determine when new or updated ticker information is present and needs to be provided to the ticker API 704.

To generally describe operation of the ticker 406 in an example embodiment, the ticker API 704 logs and knows what the ticker 406 is displaying, and also knows how often the displayed information needs to be refreshed (based on business rules or other requirements present in functions defined in the ticker UI 702). In an embodiment, there may be rules in the ticker UI level that define when at least some of the advertisements are to be presented. If it is time for an update, the ticker API 704 (acting as a container of data) calls a load function that will cause the feed manager 706 to loop through the applications 708 to search for new data, and if there is new data, the feed manager 706 will pass the new data from the application(s) 708 to the ticker API 704 so that the ticker API 704 can pass the new data to the ticker UI 702.

In another embodiment, the ticker API 704 manages the information that the ticker UI 702 will display, but it does not have knowledge of what the ticker UI 702 displays and when it is displayed. The ticker UI 702 invokes the lower level components via method calls to retrieve business objects. This means that the invocations of these lower levels are done potentially many times for each accessor/factory method to get a particular business object (assuming that there may be more than one business object needed to gather all data), including objects associated with advertisements. There are at least two routes that the ticker UI 702 can take in an embodiment.

First, the ticker UI 702 invokes the feed manager 706. This is done in situations when the business object contains some data that needs to be refreshed periodically during the session. The feed manager 706 receives several arguments that tell it which method in the ticker API 704 will return the business object, how frequently the feed manager 706 should poll this business logic, and the name of the ticker UI variable (a collection such as an array) that holds the properties of the business object for the ticker UI 702 components to use and display. The feed manager 706 calls the ticker API 704 immediately, and then at the intervals specified by the ticker UI 702. Second, the ticker UI 702 invokes the ticker API 704 directly. This bypasses the feed manager 706 and is done for data that only needs to be instantiated once during the session.

To obtain new ticker data, in an embodiment, the application(s) 708 calls a Java server page (JSP) at a web server (which may be located at the distribution server 218). Java objects at the web server will then communicate with the database 208 to obtain the appropriate ticker information. The Java objects will then construct XML code from the ticker information obtained from the database 208, and send the XML code to the corresponding application 708. The application 708 then converts the XML code to local data objects, in one embodiment, and returns the object(s) to the ticker API 704. The ticker API 704 subsequently sends the object(s) to the ticker UI 702 for display in the ticker 406.

In an embodiment, the ticker API 704 formats the data to be provided to the ticker UI 702, including advertisement data, in a manner that the viewer can interact with the advertisement at the ticker UI 702 level. For instance, the ticker API 704 can format the ticker data to provide such data with hypertext links or with other links to additional product information or to a merchant website. This formatting may include defining objects or functions that link to such advertising information.

As an example illustrated in Figure 7, the ticker API 704 can be communicatively coupled to an advertisement application 712, so that the ticker API 704 can be provided with advertisement data to pass to the ticker UI 702 for presentation. Also, the ticker API 704 can communicate with the advertisement application 712 to receive additional advertisement information requested by the viewer, to pass viewer responses for transactions to the advertisement application 712, to obtain advertisement data from the advertisement application 712 for presentation at the ticker UI 702 based on rules (such as presentation of an advertisement in response to viewer action, in response to a trigger in a television signal, in response to active or passive business rules, in response to an implicit or explicit viewer profile, and so forth, including combinations thereof).

In an embodiment, the advertisement application 712 can comprise a software module or program that can retrieve the requested advertisement information from an advertisement source 714, and then provide the requested information to the ticker API 704 or otherwise cause an advertisement to be displayed on the display screen 402.

One example of the advertisement application 712 is a browser, such as a web browser. In a browser-based or other implementation, the advertisement application 712 can include an HTML-to-text conversion component or other suitable conversion component that can convert an advertisement from an original format (such as HTML, audio, video, etc.) to a text or other data format suitable for presentation within the ticker 406. In other examples, the advertisement application 712 can comprise other types of software, familiar to those skilled in the art having the benefit of this disclosure, that can retrieve advertisements from the advertisement source(s) 714, including servers, web sites, local storage (such as the storage medium 322 having advertisements downloaded therein, which may be based on a viewer profile in some instances), carousel broadcast advertisement channel, or other sources depicted in Figures 1-2.

The advertisement application 712 can also access a viewer profile 718 (which may be an implicit or explicit profile) to determine which advertisements are appropriate for the particular viewer. The viewer profile 718 may be stored locally as the user data 324 in the storage medium 322, or it may be remotely stored (such as at the cache 110). Also, the advertisement application 712 can include or otherwise interact with trigger processing software that process triggers in a television signal, and then use the information from the triggers to select an in-context advertisement from the advertisement source 714.

The advertisement application 712 can provide the retrieved information to the ticker API 708 so that the information can be formatted for display within the ticker 406, such as depicted in Figures 4-6. It is to be appreciated that in other embodiments, some of the advertisement data (including data associated with a transaction) can be communicated between the ticker UI 702 and the advertisement application 712 without necessarily having to go through the ticker API 704. Alternatively or in addition, the advertisement application 712 can issue commands to components of the client terminal 108 (such as the tuners 300 or 310, or the input interface 318) so that these components can tune to the advertisement source 714 to obtain advertisement data.

In one embodiment, the various data exchanged between the ticker API 704, the application(s) 708, and the advertisement application 712 (such as textual advertisement information to be displayed within the ticker 406) can comprise objects, or arguments that are passed in calls. The feed manager 706 can operate in one embodiment to control the communication of data between the ticker API 704 and the advertisement application 712, including interacting with the advertisement application 712 to determine if there are updated advertisements that are available. It is to be appreciated that the feed manager 706 need not be involved in operations related to providing advertisements (and related transaction data) in some embodiments (and is therefore symbolically depicted by a broken line 716 in Figure 7).

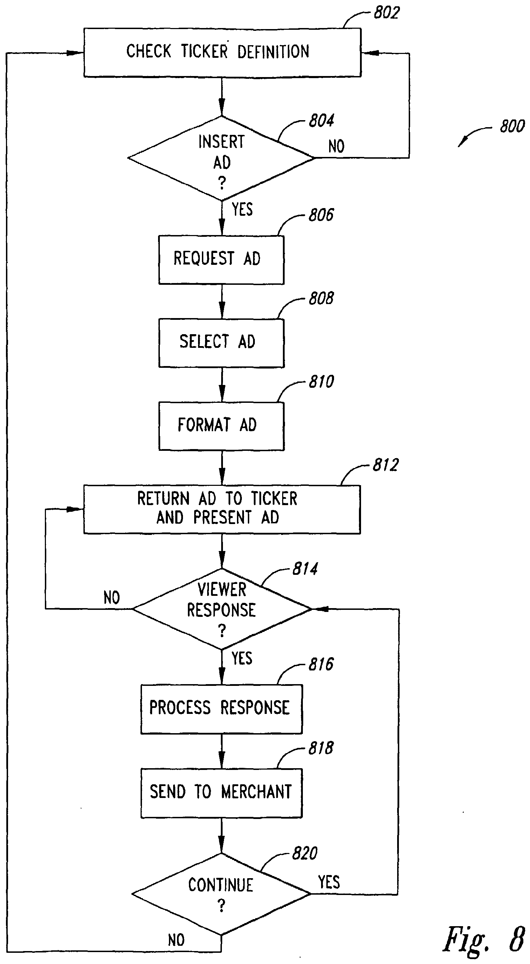

Figure 8 is a flowchart 800 illustrating automatic insertion of advertisements into the ticker 406 according to an embodiment of the invention. Figure 8 also illustrates operations associated with a resulting transaction. Elements of the flowchart 800 may be embodied in software or other machine-readable instruction stored on a machine-readable medium, such as the storage medium 322. Moreover, operations shown in the flowchart 800 need not necessarily occur in the exact order shown.

Beginning at a block 802, the ticker software (such as the ticker API 704) checks a ticker definition (which may include business rules) that specifies the conditions under which an advertisement is to be presented in the ticker 406. For instance, the ticker definition may require insertion of advertisements every 10 minutes (passive model), in response to a viewer action (active model), if certain triggers are detected (for in-context implementations), if conditions matching a viewer profile are met, or others or suitable combinations or variations thereof.

At a decision block 804 and based on the definition checked at the block 802, the ticker software determines whether an advertisement is to be inserted. If a condition specified in the block 82 is not met, then the ticker software returns to the block 802 to continue checking the definition(s) as needed until a condition for advertisement insertion is encountered.

However, if the ticker software at the block 804 determines that a condition specified in the block 802 has been met (such as if the definition specifies in-context advertisement insertion and a trigger that matches an advertisement is detected by trigger processing software), then the ticker API 704 (or the ticker UI 702) requests the advertisement at a block 806. The request can comprise a request for advertisement data sent to the advertisement application 712, in one embodiment.

At a block 808, the advertisement application 712 receives the request and selects a suitable advertisement from the advertisement source 714. Selection criteria can be based on the viewer profile 718, based on information obtained from a trigger, based on the current subcategory that the ticker 406 is scrolling, and so forth. In an embodiment, such as in a passive model, the advertisement application 712 can select any advertisement from the advertisement source 714 without any particular regard to in-context, viewer profile, or other selective criteria-the advertisement source 714 just finds an advertisement to insert into the ticker 406.

At a block 810, the selected advertisement is formatted to a format suitable for the ticker 406. This can include HTML-to-text conversion by the advertisement application 712, for instance. Alternatively or in addition, the ticker API 704 can format the advertisement data after it is passed from the advertisement application. Some of the formatting can include addition of links or graphics to the advertisement data.

At a block 812, the advertisement data is returned from the advertisement application 712 to the ticker API 704 or directly to the ticker UI 702. Once received, the ticker UI 702 presents the advertisement data in the ticker 406, such as shown in Figures 4-6.

The ticker software monitors for a viewer response to a presented advertisement at a block 814. If there is no response detected at the block 814, then the ticker software continues to monitor at the block 812. If there is a response at the block 814, such as viewer selection of the advertisement 606 in Figure 6 with the center focus box 428, the ticker UI 702 reads or "captures" the key presses sent by the viewer, and translates the key presses into data requests. In an embodiment at a block 816, the ticker UI 902 (or the ticker API 904 in another embodiment) correlates this key press information (e.g., viewer response information) with objects that have been constructed/defined and that represent transaction information, such as identification of which advertisement item in the ticker has been clicked, which product has been selected from a menu, text entry (e.g., PIN), whether the viewer is navigating through products in an advertisement, and so on. In an embodiment where it is involved, the ticker API 904 calls this object or objects, and passes the called object(s) to the advertisement application 712-otherwise, the ticker UI 702 passes the information to the advertisement application 712.

The viewer responses are received by the advertisement application 712 at a block 818, and sent to a merchant (such as a web site), as appropriate. The merchant web site may return additional information to be presented in the ticker, such as additional transaction prompts, error notices, and the like, which the advertisement application 712 will pass back to the ticker UI 702 directly or to the ticker API 704 so that this information can be presented in the ticker 406 to allow the viewer to continue the transaction at a block 820. Thereafter, the ticker software again monitors for viewer responses at a block 814. If there are no more viewer responses, such as if the viewer has finished or canceled the transaction at the block 820, then the ticker software resumes monitoring for advertisement insertion conditions at the block 802.

As an example, a satellite television (TV) delivery system may be implemented alternatively or in addition to a cable distribution system. A satellite TV delivery system may comprise a direct broadcast satellite (DBS) system. A DBS system may comprise a small 18-inch satellite dish (which is an antenna for receiving a satellite broadcast signal); a digital integrated receiver/decoder (IRD), which separates each channel, and decompresses and translates the digital signal so a television can show it; and a remote control. Programming for a DBS system may be distributed, for example, by multiple high-power satellites in geosynchronous orbit, each with multiple transponders. Compression (e.g., MPEG) is used to increase the amount of programming that can be transmitted in the available bandwidth.

A digital broadcast center (e.g., analogous to the head-end 106) may be used to gather programming content, ensure its digital quality, and transmit the signal up to the satellites. Programming may come to the broadcast center from content providers (TBS™, HBO™, CNN™, ESPN™, etc.) via satellite, fiber optic cable, and/or special digital tape. Satellite-delivered programming is typically immediately digitized, encrypted and uplinked to the orbiting satellites. The satellites retransmit the signal back down to every earth-station--or, in other words, every compatible DBS system receiver dish at customers' homes and businesses.

Some programs may be recorded on digital videotape in the broadcast center to be broadcast later. Before any recorded programs are viewed by customers, technicians may use post-production equipment to view and analyze each tape to ensure audio and video quality. Tapes may then be loaded into a robotic tape handling system, and playback may be triggered by a computerized signal sent from a broadcast automation system. Back-up videotape playback equipment may ensure uninterrupted transmission when appropriate.

## Claims

1. A method (800), comprising:
receiving a television signal from a video casting system through a first tuner (300) of a client terminal (108) and presenting the received television signal on a first portion (404) of a display screen (402) coupled to the client terminal;
receiving through a second tuner (310) of the client terminal (108) advertisement data of an advertisement
extracting identification information that has been placed in the vertical blanking interval of the television signal;
receiving a command at the client terminal from a remote control including a ticker button when the ticker button is pressed by a viewer, and wherein the command instructs a ticker to be displayed on the display screen;
in response to receiving the command from the remote control, presenting the ticker (406) having a scroll region for displaying and automatically scrolling the advertisement (426) on a second portion of the display screen, the second portion of the display screen being a minority portion relative to the first portion of the display screen;
the client terminal processing the identification information to identify and select (808) the advertisement, and wherein the selected advertisement is in context with subject matter of the television signal presented on the display screen;
presenting (812) the selected advertisement (426) within the scroll region of the ticker, wherein the selected advertisement (426) comprises one or more items that automatically scroll in the scroll region, and wherein an item of the one or more items is selectable by viewer response using the remote control when the item has scrolled into a center focus box (428) displayed on the scroll region;
processing the viewer response (818) and sending viewer response information to a merchant (818) to conduct a transaction;
receiving additional transaction information from the merchant; and
presenting said additional transaction information within the scroll region of the ticker to allow said viewer to conduct the transaction by further viewer response (814) using the remote control when an item of said additional transaction information has scrolled into the center focus box (428).

2. The method (800) of claim 1, further comprising selecting (808) the advertisement in response to active or passive business rules.

3. The method (800) of claim 1, further comprising selecting (808) the advertisement based on profile information.

4. The method (800) of claim 3 wherein the profile information comprises explicit profile information which has been created by the viewed and stored and which specifies information about the viewer.

5. The method (800) of claim 3 wherein the profile information comprises implicit profile information created by collecting viewer behavior data.

6. The method (800) of claim 1, further comprising rendering a window (610) having a video communication image (612) on the display screen, the video communication image being related to a transaction initiated in response to the presented advertisement.

7. The method (800) of claim 1, further comprising converting (810) the selected advertisement from an initial format to a format usable with the ticker.

8. The method (800) of claim 1, further comprising providing the presented advertisement (812) with a link to indicate availability of a transaction related to the presented advertisement.

9. An apparatus for a video casting system, the apparatus comprising:
a display screen (400);
a client terminal (108) coupled to the display screen; and
a remote control (410) including a ticker button pressable by a viewer to send a command to the client terminal instructing the client terminal to display a ticker on the display screen, wherein the client terminal comprises:
a first tuner (300) for receiving a television signal from the video casting system, the television signal including identification information in the vertical banking interval of the television signal;
a second tuner (310) to receive advertisement data for an advertisement (314) sent from the video casting system;
a storage medium (322) coupled to a communication interface and storing a ticker software program;
a processor (320), coupled to the storage medium and to the communication interface, to cooperate with the ticker software program to control presentation of the advertisement within a scroll region of a ticker (406), wherein the scroll region is for displaying and automatically scrolling an advertisement (426); and
an output section to provide the ticker (406) to a display screen (402) capable to present the ticker (406) responsive to receiving the command from the remote control concurrently with a received television program image (404), the advertisement (426) being selected by the ticker software program to be inserted into the scroll region of the ticker based on identification information extracted from the received television signal and wherein the selected advertisement is in context with subject matter of the received television program image, and wherein the selected advertisement (426) comprises one or more selectable items that automatically scroll in the scroll region, and wherein an item of the one or more selectable items is selectable by viewer response using the remote control when the item has been scrolled into a center focus box (428) displayed on the scroll region, and the processor further configured by software to;
process the viewer response and send viewer response information to a merchant to conduct a transaction;
receive additional transaction information from the merchant; and
present said additional transaction information within the scroll region of the ticker to allow said viewer to conduct the transaction by further viewer response using the remote control when an item of said additional transaction information has scrolled into the center focus box.

10. The apparatus (108) of claim 9 wherein the ticker software program (700) comprises:
a ticker user interface (702) to generate the scroll region that presents the advertisement and to provide the navigation control to select the advertisement presented within the scroll region;
a ticker application program interface (704) in communication with the ticker user interface to control presentation of the advertisement by the ticker user interface and to provide the selectable items to the ticker user interface; and
an advertisement application (712) in communication with the ticker application program interface to select and provide the advertisement to the ticker application program interface.

11. The apparatus (108) of claim 9 wherein the ticker software program (700) includes code to select the advertisement to insert in the ticker based on profile data.

12. The apparatus of claim 9 wherein the ticker software program (700) includes code to present transaction information, related to the inserted advertisement, within the scroll region of the ticker and in response to user selection of the inserted advertisement.

13. A video casting system (100), comprising:
a source of ticker data (106); and
the apparatus (108) of claim 9 or 10 coupled to the source.

14. The system (100) of claim 13 wherein the advertisement is sent to the storage medium (322) from the video casting system and provided to the ticker from the storage medium.

15. The system (100) of claim 13 wherein the ticker software program (700) includes code to select the advertisement to insert in the ticker based on profile data.

16. The system (100) of claim 13 wherein the source of ticker data comprises:
a feed server (202) to receive a plurality of feeds (200) of ticker data and having a feed engine (204) to manipulate the ticker data received from the feeds;
a production server (206) coupled to the feed server (202) to receive the ticker data manipulated by the feed engine, and coupled to a database (208) having tables (212) for the manipulated ticker data received from the feed server, the production server being capable to change a format of the manipulated ticker data to a format compatible with client terminals (108) configured to present the ticker on the display screen; and
a distribution server (218) to send the manipulated ticker data having the format compatible with the client terminals (108).

## Patentansprüche

1. Verfahren (800), umfassend:
Empfangen eines Fernsehsignals von einem Video-Casting-System durch einen ersten Tuner (300) eines Client-Endgeräts (108) und Präsentieren des empfangenen Fernsehsignals auf einem ersten Abschnitt (404) eines Bildschirms (402), der mit dem Client-Endgerät gekoppelt ist;
Empfangen von Werbedaten einer Werbung über einen zweiten Tuner (310) des Client-Endgeräts (108);
Extrahieren von Identifikationsinformationen, die in die vertikale Austastlücke des Fernsehsignals platziert wurden;
Empfangen eines Befehls an dem Client-Endgerät von einer Fernbedienung, einschließlich einer Ticker-Taste, wenn die Ticker-Taste von einem Zuschauer gedrückt wird, und wobei der Befehl einen Ticker anweist, auf dem Bildschirm angezeigt zu werden;
Präsentieren des Tickers (406) mit einem Scrollbereich zum Anzeigen und automatischen Scrollen der Werbung (426) auf einem zweiten Abschnitt des Bildschirms als Reaktion auf das Empfangen des Befehls von der Fernbedienung, wobei der zweite Abschnitt des Bildschirms relativ zum ersten Abschnitt des Bildschirms ein Minoritätenabschnitt ist;
wobei das Client-Endgerät die Identifikationsinformationen verarbeitet, um die Werbung zu identifizieren und auszuwählen (808), und wobei die ausgewählte Werbung in Zusammenhang mit dem Gegenstand des auf dem Bildschirm präsentierten Fernsehsignals steht;
Präsentieren (812) der ausgewählten Werbung (426) innerhalb des Scrollbereichs des Tickers, wobei die ausgewählte Werbung (426) ein oder mehrere Elemente umfasst, die automatisch in den Scrollbereich scrollen, und wobei ein Element des einen oder der mehreren Elemente durch eine Reaktion des Zuschauers unter Verwendung der Fernbedienung auswählbar ist, wenn das Element in ein in dem Scrollbereich angezeigtes mittleres Fokusfeld (428) gescrollt wurde;
Verarbeiten der Zuschauerreaktion (818) und Senden von Zuschauerreaktionsinformationen an einen Händler (818), um eine Transaktion durchzuführen;
Empfangen zusätzlicher Transaktionsinformationen von dem Händler; und
Präsentieren der zusätzlichen Transaktionsinformationen innerhalb des Scrollbereichs des Tickers, um es dem Zuschauer zu ermöglichen, die Transaktion durch eine weitere Zuschauerreaktion (814) unter Verwendung der Fernbedienung durchzuführen, wenn ein Element der zusätzlichen Transaktionsinformationen in das mittlere Fokusfeld (428) gescrollt wurde.

2. Verfahren (800) nach Anspruch 1, ferner umfassend das Auswählen (808) der Werbung als Reaktion auf aktive oder passive Geschäftsregeln.

3. Verfahren (800) nach Anspruch 1, ferner umfassend das Auswählen (808) der Werbung basierend auf Profilinformationen.

4. Verfahren (800) nach Anspruch 3, wobei die Profilinformationen explizite Profilinformationen umfassen, die durch das Angezeigte und das Gespeicherte erstellt wurden und die Informationen über den Zuschauer spezifizieren.

5. Verfahren (800) nach Anspruch 3, wobei die Profilinformationen implizite Profildaten umfassen, die durch Sammeln von Zuschauerverhaltensdaten erzeugt wurden.

6. Das Verfahren (800) nach Anspruch 1, das ferner das Rendern eines Fensters (610) mit einem Videokommunikationsbild (612) auf dem Bildschirm umfasst, wobei das Videokommunikationsbild mit einer Transaktion, die als Reaktion auf die präsentierte Werbung initiiert wurde, in Beziehung steht.

7. Verfahren (800) nach Anspruch 1, ferner umfassend das Umwandeln (810) der ausgewählten Werbung von einem Ausgangsformat in ein Format, das mit dem Ticker verwendbar ist.

8. Verfahren (800) nach Anspruch 1, ferner umfassend das Versehen der präsentierten Werbung (812) mit einer Verknüpfung, um die Verfügbarkeit einer Transaktion, die in Beziehung mit der präsentierten Werbung steht, anzuzeigen.

9. Vorrichtung für ein Video-Casting-System, wobei die Vorrichtung Folgendes umfasst:
einen Bildschirm (400);
ein Client-Endgerät (108), das mit dem Bildschirm gekoppelt ist; und
eine Fernbedienung (410), einschließlich einer Ticker-Taste, die von einem Zuschauer gedrückt werden kann, um einen Befehl an das Client-Endgerät zu senden, der das Client-Endgerät anweist, einen Ticker auf dem Bildschirm anzuzeigen, wobei das Client-Endgerät Folgendes umfasst:
einen ersten Tuner (300) zum Empfangen eines Fernsehsignals von dem Video-Casting-System, wobei das Fernsehsignal Identifikationsinformationen in der vertikalen Austastlücke des Fernsehsignals enthält;
einen zweiten Tuner (310) zum Empfangen von Werbedaten für eine Werbung (314), die von dem Video-Casting-System gesendet wird;
ein Speichermedium (322), das mit einer Kommunikationsschnittstelle gekoppelt ist und ein Ticker-Software-Programm speichert;
einen Prozessor (320), der mit dem Speichermedium und der Kommunikationsschnittstelle gekoppelt ist, um mit dem Ticker-Software-Programm zusammenzuarbeiten, um die Präsentation der Werbung innerhalb eines Scrollbereichs eines Tickers (406) zu steuern, wobei der Scrollbereich zum Anzeigen und automatischen Scrollen einer Werbung (426) vorgesehen ist; und
einen Ausgabeabschnitt zum Bereitstellen des Tickers (406) an einen Bildschirm (402), der in der Lage ist, den Ticker (406) ansprechend auf das Empfangen des Befehls von der Fernbedienung gleichzeitig mit einem empfangenen Fernsehprogrammbild (404) zu präsentieren, wobei die Werbung (426) durch das Ticker-Software-Programm auf der Grundlage der aus dem empfangenen Fernsehsignal extrahierten Identifikationsinformationen ausgewählt wird, um in den Scrollbereich des Tickers eingefügt zu werden, und wobei die ausgewählte Werbung in Zusammenhang mit dem Gegenstand des empfangenen Fernsehprogrammbildes steht und wobei die ausgewählte Werbung (426) ein oder mehrere auswählbare Elemente umfasst, die automatisch in den Bild-Scrollbereich scrollen, und wobei ein Element des einen oder der mehreren auswählbaren Elemente durch die Zuschauerreaktion unter Verwendung der Fernbedienung auswählbar ist, wenn das Element in ein mittleres Fokusfeld (428) gescrollt wurde, das auf dem Scrollbereich angezeigt wird, und wobei der Prozessor ferner durch Software zu Folgendem konfiguriert ist:
Verarbeiten der Zuschauerreaktion und Senden von Zuschauerreaktionsinformationen an einen Händler, um eine Transaktion durchzuführen;
Empfangen von zusätzlichen Transaktionsinformationen vom Händler; und Präsentieren der zusätzlichen Transaktionsinformationen innerhalb des Scrollbereichs des Tickers, um es dem Zuschauer zu ermöglichen, die Transaktion durch eine weitere Zuschauerreaktion unter Verwendung der Fernbedienung durchzuführen, wenn ein Element der zusätzlichen Transaktionsinformationen in das mittlere Fokusfeld gescrollt wurde.

10. Vorrichtung (108) nach Anspruch 9, wobei das Ticker-Software-Programm (700) Folgendes umfasst:
eine Ticker-Benutzerschnittstelle (702), um den Scrollbereich zu erzeugen, der die Werbung präsentiert, und um die Navigationssteuerung bereitzustellen, um die Werbung auszuwählen, die innerhalb des Scrollbereichs präsentiert wird;
eine Ticker-Anwendungsprogramm-Schnittstelle (704) in Kommunikation mit der Ticker-Benutzerschnittstelle, um die Präsentation der Werbung durch die Ticker-Benutzerschnittstelle zu steuern und die auswählbaren Elemente der Ticker-Benutzerschnittstelle bereitzustellen; und
eine Werbeanwendung (712) in Kommunikation mit der Ticker-Anwendungsprogramm-Schnittstelle, um die Werbung auszuwählen und diese der Ticker-Anwendungsprogramm-Schnittstelle bereitzustellen.

11. Vorrichtung (108) nach Anspruch 9, wobei das Ticker-Software-Programm (700) Code zum Auswählen der Werbung enthält, um sie basierend auf den Profildaten in den Ticker einzufügen.

12. Vorrichtung nach Anspruch 9, wobei das Ticker-Software-Programm (700) einen Code zum Präsentieren von Transaktionsinformationen, die mit der eingefügten Werbung in Beziehung stehen, innerhalb des Scrollbereichs des Tickers und als Reaktion auf die Benutzerauswahl der eingefügten Werbung enthält.

13. Ein Video-Casting-System (100), umfassend:
eine Quelle von Tickerdaten (106); und
wobei die Vorrichtung (108) nach Anspruch 9 oder 10 mit der Quelle gekoppelt ist.

14. System (100) nach Anspruch 13, wobei die Werbung von dem Video-Casting-System an das Speichermedium (322) gesendet und dem Ticker von dem Speichermedium bereitgestellt wird.

15. System (100) nach Anspruch 13, wobei das Ticker-Software-Programm (700) Code enthält, um die Werbung auszuwählen, um sie basierend auf den Profildaten in den Ticker einzufügen.

16. System (100) nach Anspruch 13, wobei die Quelle von Tickerdaten Folgendes umfasst:
einen Feed-Server (202), der mehrere Feeds (200) von Tickerdaten empfängt und der eine Feed-Engine (204) zum Manipulieren der von den Feeds empfangenen Tickerdaten aufweist;
einen Produktionsserver (206), der mit dem Feed-Server (202) gekoppelt ist, um die von der Feed-Engine manipulierten Tickerdaten zu empfangen, und mit einer Datenbank (208) mit Tabellen (212) für die von dem Feed-Server empfangenen manipulierten Tickerdaten gekoppelt ist, wobei der Produktionsserver in der Lage ist, ein Format der manipulierten Tickerdaten in ein Format zu ändern, das mit Client-Endgeräten (108) kompatibel ist, die konfiguriert sind, um den Ticker auf dem Bildschirm zu präsentieren; und
einen Verteilungsserver (218) zum Senden der manipulierten Tickerdaten mit dem Format, das mit den Client-Endgeräten (108) kompatibel ist.

## Revendications

1. Procédé (800) comprenant :
la réception d'un signal de télévision provenant d'un système de diffusion vidéo à travers un premier syntoniseur (300) d'un terminal client (108) et la présentation du signal de télévision reçu sur une première partie (404) d'un écran d'affichage (402) couplé au terminal client ;
la réception à travers un second syntoniseur (310) du terminal client (108) de données de publicité d'une publicité ;
l'extraction d'informations d'identification qui ont été placées dans l'intervalle de suppression vertical du signal de télévision ;
la réception d'une commande au niveau du terminal client provenant d'une commande à distance incluant un bouton de téléscripteur lorsque le bouton de téléscripteur est pressé par un téléspectateur, et la commande ordonnant l'affichage d'un téléscripteur sur l'écran d'affichage ;
en réponse à la réception de la commande provenant de la commande à distance, la présentation du téléscripteur (406) ayant une zone de défilement pour afficher et faire défiler automatiquement la publicité (426) sur une seconde partie de l'écran d'affichage, la seconde partie de l'écran d'affichage étant une partie minoritaire par rapport à la première partie de l'écran d'affichage ;
le terminal client traitant les informations d'identification pour identifier et sélectionner (808) la publicité, et la publicité sélectionnée étant en rapport avec le sujet du signal de télévision présenté sur l'écran d'affichage ;
la présentation (812) de la publicité sélectionnée (426) à l'intérieur de la zone de défilement du téléscripteur, la publicité sélectionnée (426) comprenant un ou plusieurs éléments qui défilent automatiquement dans la zone de défilement, et un élément des un ou plusieurs éléments étant sélectionnable par un téléspectateur en réponse à l'utilisation de la commande à distance lorsque l'élément a défilé dans une boîte de mise au point centrale (428) affichée sur la zone de défilement ;
le traitement de la réponse de téléspectateur (818) et l'envoi d'informations de réponse de téléspectateur à un commerçant (818) pour réaliser une transaction ;
la réception d'informations de transaction supplémentaires du commerçant ; et
la présentation desdites informations de transaction supplémentaires à l'intérieur de la zone de défilement du téléscripteur pour permettre audit téléspectateur de réaliser la transaction par une autre réponse de téléspectateur (814) à l'aide de la commande à distance lorsqu'un élément desdites informations de transaction supplémentaires s'est déplacé dans la boîte de mise au point centrale (428).

2. Procédé (800) selon la revendication 1, comprenant en outre la sélection (808) de la publicité en réponse à des règles commerciales actives ou passives.

3. Procédé (800) selon la revendication 1, comprenant en outre la sélection (808) de la publicité sur la base d'informations de profil.

4. Procédé (800) selon la revendication 3, dans lequel les informations de profil comprennent des informations de profil explicites qui ont été créées par le téléspectateur et stockées et qui spécifient des informations concernant le téléspectateur.

5. Procédé (800) selon la revendication 3, dans lequel les informations de profil comprennent des informations de profil implicites créées en collectant des données de comportement de téléspectateur.

6. Procédé (800) selon la revendication 1, comprenant en outre le rendu d'une fenêtre (610) ayant une image de communication vidéo (612) sur l'écran d'affichage, l'image de communication vidéo étant liée à une transaction initiée en réponse à la publicité présentée.

7. Procédé (800) selon la revendication 1, comprenant en outre la conversion (810) de la publicité sélectionnée à partir d'un format initial en un format utilisable avec le téléscripteur.

8. Procédé (800) selon la revendication 1, comprenant en outre la fourniture de la publicité présentée (812) avec un lien pour indiquer la disponibilité d'une transaction liée à la publicité présentée.

9. Appareil pour un système de diffusion vidéo, l'appareil comprenant :
un écran d'affichage (400) ;
un terminal client (108) couplé à l'écran d'affichage ; et
une commande à distance (410) incluant un bouton de téléscripteur pouvant être pressé par un téléspectateur pour envoyer une commande au terminal client ordonnant au terminal client d'afficher un téléscripteur sur l'écran d'affichage, le terminal client comprenant :
un premier syntoniseur (300) pour recevoir un signal de télévision à partir du système de diffusion vidéo, le signal de télévision incluant des informations d'identification dans l'intervalle de suppression vertical du signal de télévision ;
un second syntoniseur (310) pour recevoir des données de publicité pour une publicité (314) envoyée à partir du système de diffusion vidéo ;
un support de stockage (322) couplé à une interface de communication et stockant un programme logiciel de téléscripteur ;
un processeur (320), couplé au support de stockage et à l'interface de communication, pour coopérer avec le programme logiciel de téléscripteur afin de commander la présentation de la publicité à l'intérieur d'une zone de défilement d'un téléscripteur (406), la zone de défilement étant destinée à afficher et faire défiler automatiquement une publicité (426) ; et
une section de sortie pour fournir le téléscripteur (406) à un écran d'affichage (402) capable de présenter le téléscripteur (406) en réponse à la réception de la commande provenant de la commande à distance en même temps qu'une image de programme de télévision reçue (404), la publicité (426) étant sélectionnée par le programme logiciel de téléscripteur à insérer dans la zone de défilement du téléscripteur sur la base d'informations d'identification extraites du signal de télévision reçu et la publicité sélectionnée étant en rapport avec le sujet de l'image de programme de télévision reçue, et la publicité sélectionnée (426) comprenant un ou plusieurs éléments sélectionnables qui défilent automatiquement dans la zone de défilement, et un élément des un ou plusieurs éléments sélectionnables pouvant être sélectionné par un téléspectateur en réponse à l'utilisation de la commande à distance lorsque l'élément s'est déplacé dans une boîte de mise au point centrale (428) affichée sur la zone de défilement, et le processeur étant configuré par le logiciel pour :
traiter la réponse de téléspectateur et envoyer des informations de réponse de téléspectateur à un commerçant pour réaliser une transaction ;
recevoir des informations de transaction supplémentaires du commerçant ; et
présenter lesdites informations de transaction supplémentaires à l'intérieur de la zone de défilement du téléscripteur pour permettre audit téléspectateur de réaliser la transaction par une autre réponse de téléspectateur à l'aide de la commande à distance lorsqu'un élément desdites informations de transaction supplémentaires s'est déplacé dans la boîte de mise au point centrale.

10. Appareil (108) selon la revendication 9, dans lequel le programme logiciel de téléscripteur (700) comprend :
une interface utilisateur de téléscripteur (702) pour générer la zone de défilement qui présente la publicité et pour fournir la commande de navigation afin de sélectionner la publicité présentée à l'intérieur de la zone de défilement ;
une interface de programme d'application de téléscripteur (704) en communication avec l'interface utilisateur de téléscripteur pour commander la présentation de la publicité par l'interface utilisateur de téléscripteur et pour fournir les éléments sélectionnables à l'interface utilisateur de téléscripteur ; et
une application de publicité (712) en communication avec l'interface de programme d'application de téléscripteur pour sélectionner et fournir la publicité à l'interface de programme d'application de téléscripteur.

11. Appareil (108) selon la revendication 9, dans lequel le programme logiciel de téléscripteur (700) inclut un code pour sélectionner la publicité à insérer dans le téléscripteur sur la base de données de profil.

12. Appareil selon la revendication 9, dans lequel le programme logiciel de téléscripteur (700) inclut un code pour présenter des informations de transaction, liées à la publicité insérée, à l'intérieur de la zone de défilement du téléscripteur et en réponse à la sélection d'utilisateur de la publicité insérée.

13. Système de diffusion vidéo (100), comprenant :
une source de données de téléscripteur (106) ; et
l'appareil (108) selon la revendication 9 ou 10 couplé à la source.

14. Système (100) selon la revendication 13, dans lequel la publicité est envoyée au support de stockage (322) à partir du système de diffusion vidéo et fournie au téléscripteur à partir du support de stockage.

15. Système (100) selon la revendication 13, dans lequel le programme logiciel de téléscripteur (700) inclut un code pour sélectionner la publicité à insérer dans le téléscripteur sur la base de données de profil.

16. Système (100) selon la revendication 13, dans lequel la source de données de téléscripteur comprend :
un serveur d'alimentation (202) pour recevoir une pluralité d'alimentations (200) de données de téléscripteur et ayant un moteur d'alimentation (204) pour manipuler les données de téléscripteur reçues à partir des alimentations ;
un serveur de production (206) couplé au serveur d'alimentation (202) pour recevoir les données de téléscripteur manipulées par le moteur d'alimentation, et couplé à une base de données (208) ayant des tableaux (212) pour les données de téléscripteur manipulées reçues à partir du serveur d'alimentation, le serveur de production étant capable de modifier un format des données de téléscripteur manipulées en un format compatible avec des terminaux clients (108) configurés pour présenter le téléscripteur sur l'écran d'affichage ; et
un serveur de distribution (218) pour envoyer les données de téléscripteur manipulées ayant le format compatible avec les terminaux clients (108).
